# EUROPEAN PATENT APPLICATION

(11) **EP 4 706 876 A1**
(43) Date of publication of application: **11.03.2026**
(21) Application number: 24844602.3
(22) Date of filing: 09.07.2024
(51) Int. Cl.: B23P 15/00, F03B 11/02, B23K 31/02

(54) **MANUFACTURING METHOD FOR SEAT RING VOLUTE OF PUMPED STORAGE UNIT**

(30) Priority: 25.07.2023 CN 202310915687
(71) Applicant: Dongfang Electric Machinery Co., Ltd. of Dongfang Electric Group, Deyang, Sichuan 618000 (CN)
(72) Inventor: YANG, Jun, Deyang, Sichuan 618000 (CN); YANG, Wangbo, Deyang, Sichuan 618000 (CN); WANG, Nengqing, Deyang, Sichuan 618000 (CN); LIU, Hui, Deyang, Sichuan 618000 (CN); ZHANG, Guangping, Deyang, Sichuan 618000 (CN); FENG, Tao, Deyang, Sichuan 618000 (CN); WU, Jianjie, Deyang, Sichuan 618000 (CN); LIANG, Cheng, Deyang, Sichuan 618000 (CN); ZHONG, Lei, Deyang, Sichuan 618000 (CN); YIN, Xiang, Deyang, Sichuan 618000 (CN); YIN, Zhongkai, Deyang, Sichuan 618000 (CN); PENG, Xieyi, Deyang, Sichuan 618000 (CN); TANG, Dong, Deyang, Sichuan 618000 (CN); LIU, Qiang, Deyang, Sichuan 618000 (CN)
(74) Representative: Herrmann, Daniel
(86) International application number: PCT/CN2024/104402
(87) International publication number: WO 2025/020908

(57) **Abstract**

The present disclosure relates to hydraulic turbine manufacturing technology and discloses a method for manufacturing a stay ring and spiral case assembly of a pumped storage unit. In this method, two (left and right) spiral case segments are arranged along a split surface of the stay ring and spiral case assembly, eliminating a "transition plate + joint section" structure at the split surface. The two split segments of the spiral case are cut and formed in one piece, welded and annealed in the factory, and then cut along the split surfaces. The split surfaces of the split segments of the spiral case are processed together with the assembly surfaces of the stay ring, forming the two split segments of the stay ring and spiral case assembly. The two split segments of the stay ring and spiral case assembly are transported to the construction site, where they are rounded and assembled by welding. The entire the stay ring and spiral case assembly only has a circumferential weld on the assembly surfaces. Therefore, the manufacturing method of the present disclosure can improve the assembly dimensional accuracy and welding quality of the split segments of the stay ring and spiral case assembly, and shorten the manufacturing cycle.

## Description

### Technical Field

The present application relates to hydraulic turbine manufacturing, and in particular to a method for manufacturing a stay ring and spiral case assembly of a pumped storage unit.

### Background

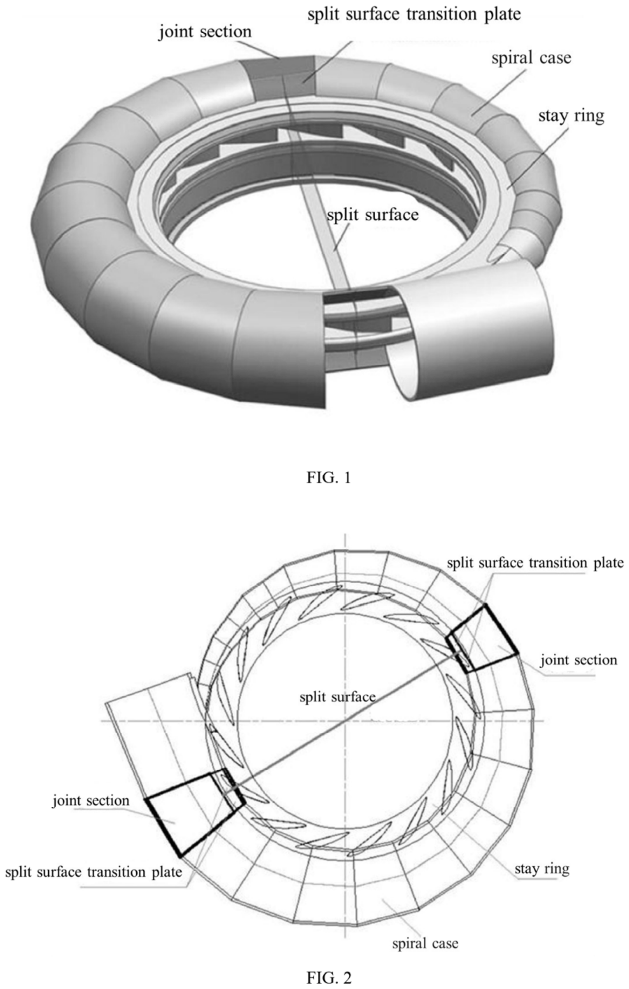

A pumped storage power station uses electricity during low power load periods to pump water into a reservoir, and releases water to a downstream reservoir to generate electricity during peak power load periods. It can convert excess electricity during low grid load periods into high-value electricity during peak grid load periods. At present, a split surface of a stay ring and spiral case assembly in the existing pumped storage unit adopts "split surface transition plate + joint section (also called compensation section)" structure, referring to FIG. 1 of the specification, a manufacturing process thereof is as follows: cutting and forming the joint section and the transition plate as one piece, separating the transition plate from the one-piece joint section and translation plate, assembling and welding the transition plate to a stay ring, rounding the stay ring, preparing and adjusting the joint section, and assembling and welding the joint section to the transition plate on a construction site. During the manufacturing process, since a dimension of the formed joint section and a dimension of an end surface of the spiral case adjacent to the joint section have standard tolerances, the joint section is prepared as a three-dimensional spatial curve. Therefore, the existing stay ring and spiral case assembly and its manufacturing method have the following problems and difficulties:
(1) After the integral forming of the joint section, the transition plate needs to be separated therefrom and subsequently welded to the stay ring, followed by being welded to the joint section. This process involves multiple operations, including several non-value-added operations.
(2) When the joint section is prepared and adjusted, in order to ensure the dimensional accuracy of end surfaces of the joint section respectively adjacent to water inlet and outlet ends, both of the two end surfaces need to be processed, and the processing of the two end surfaces requires a processing transfer involving multiple operations, which entails significant time for workpiece repositioning and processing.
(3) It is difficult to prepare and adjust the joint section in the factory, since a gap and misalignment often exceed the tolerance. It is difficult to meet a 100% qualified size of the joint section.
(4) The preparation of the joint section is done twice, which takes up a long production cycle.
(5) The joint section is difficult to assemble on the construction site. The welding volume is large, the welding stress is high, the deformation of the stay ring after welding is significant, and a manufacturing cycle at the construction site is long.

For example, the invention patent NO. CN114473377A, published on May 13, 2022 and entitled "METHOD FOR MANUFACTURING STAY RING AND SPIRAL CASE ASSEMBLY OF HYDROTURBINE" includes the following operations: a. cutting a disc-shaped edge and a compensation section as a whole, rolling and molding the disc-shaped edge and the compensation section integrally, and subsequently cutting them into individual pieces, with adjacent disc-shaped edges forming a single piece; b. rounding two split segments of a stay ring and spiral case assembly, overlapping and fixing the two split segments, followed by assembling and welding the disc-shaped edges at a split surface of the stay ring and spiral case assembly; c. pre-assembling the compensation section at the split surface of the stay ring and spiral case assembly to complete the manufacturing of the spiral case and the stay ring. The present disclosure can avoid excessive misalignment during the pre-assembly and assembly of the compensation section and the disc-shaped edge of the stay ring and spiral case assembly of a large hydraulic turbine, ensure the stability of the manufacturing quality, simplify the manufacturing process, and effectively improve the manufacturing efficiency.

Although the above-mentioned prior art proposes a new method for manufacturing the stay ring and spiral case assembly, the structural design of the joint section and transition plate in this patent still follows traditional forms. As a result, several issues and shortcomings persist. Therefore, there are still problems and defects, such as difficulty in preparing and adjusting the joint section, difficulty in ensuring the quality of the stay ring and spiral case assembly, and a long overall manufacturing cycle.

### Summary

To address the problems and defects in the prior art, the present disclosure provides method for manufacturing a stay ring and spiral case assembly of a pumped storage unit. In this solution, two (left and right) spiral case segments are arranged along a split surface of the stay ring and spiral case assembly, eliminating a "transition plate + joint section" structure at the split surface. The two split segments of the spiral case are cut and formed in one piece, welded and annealed in the factory, and then cut along the split surfaces. The split surfaces of the split segments of the spiral case are processed together with the assembly surfaces of the stay ring, forming the two split segments of the stay ring and spiral case assembly. The two split segments of the stay ring and spiral case assembly are transported to the construction site, where they are rounded and assembled by welding. The entire the stay ring and spiral case assembly only has a circumferential weld on the assembly surfaces. Therefore, the manufacturing method of the present disclosure can improve the assembly dimensional accuracy and welding quality of the split segments of the stay ring and spiral case assembly, and shorten the manufacturing cycle.

To achieve the above objectives, the technical solution of the present disclosure is specifically as follows.

A method for manufacturing a stay ring and spiral case assembly of a pumped storage unit, characterized in that the stay ring and spiral case assembly is divided into two segments at 180 degrees for assembly and welding to meet transportation requirements, wherein the method comprises the following operations:
operation S1, integrally cutting spiral case sections, wherein split spiral case sections among the spiral case sections located at split surfaces of the stay ring and spiral case assembly are preset with an assembling and cutting allowance;
operation S2, assembling all of the spiral case sections other than the split spiral case sections on two split blanks of a stay ring, rounding and leveling the two split blanks of the stay ring with the case sections, assembling the split spiral case sections on the rounded and leveled structure to form a complete blank of the stay ring and spiral case assembly, dividing the blank of the stay ring and spiral case assembly into two split blanks of the stay ring and spiral case assembly, and annealing the two split blanks of the stay ring and spiral case assembly respectively.
operation S3, processing assembly surfaces of the two split blanks of the stay ring and spiral case assembly to form flat edges and bevel edges, so as to form two split segments of the stay ring and spiral case assembly;
operation S4, transporting the two split segments of the stay ring and spiral case assembly to a construction site, rounding the two split segments of the stay ring and spiral case assembly on the construction site, and welding the two split segments of the stay ring and spiral case assembly along assembly surfaces of the two split segments of the stay ring and spiral case assembly to form a whole structure, thereby completing the manufacture of the stay ring and spiral case assembly.

Preferably, in the operation S1, the integrally cutting refers to integrally cutting and forming the spiral case sections through a Computer Numerical Control (CNC) machine tool.

Preferably, the operation S2 specifically includes the following operations:
operation S2.1, assembling and welding upper and lower ring plates of the stay ring to fixed guide vanes to obtain the two split blanks of the stay ring, processing assembly surfaces of the two split blanks of the stay ring, with a subsequent processing allowance left on two ends of each of the assembly surfaces.
operation S2.2, drawing a water guide mechanism centerline of each split blank of the stay ring, using an intersection line of a theoretical assembly surface of each split blank of the stay ring and a plane where an upper or lower plane of each split blank of the stay ring is located as an X-axis, drawing a Y-axis perpendicular to the X-axis, and using the water guide mechanism centerline, the X-axis, and the Y-axis as assembly reference lines for the split blank of the stay ring;
operation S2.3, according to the assembly reference lines for the split blank of the stay ring, assembling and welding all of the spiral case sections except the split spiral case sections onto the two split blanks of the stay ring to form two first-stage split blanks of the stay ring and spiral case assembly;
operation S2.4, redrawing the water guide mechanism centerline and the X-axis and Y-axis of each split blank of the stay ring in the same manner as in the operation S2.2;
operation S2.5, according to the redrawn water guide mechanism centerline, X-axis, and Y-axis, rounding and leveling the two first-stage split blanks of the stay ring and spiral case assembly, and adding a spacer between assembly surfaces of the two first-stage split blanks of the stay ring and spiral case assembly to constitute a first-stage blank of the stay ring and spiral case assembly, wherein two spacers are respectively provided between the two first-stage split blanks of the stay ring and spiral case assembly;
operation S2.6, assembling the split spiral case sections on the first-stage blank of the stay ring and spiral case assembly to form a second-stage blank of the stay ring and spiral case assembly, and welding an anti-deformation support on an inner circle side of each of the split spiral case sections;
operation S2.7, completing half of weld penetration of single-sided weld grooves at all flat, horizontal, and vertical welding positions of the split spiral case sections, and splitting the second-stage blank of the stay ring and spiral case assembly into two segments along a cutting line to form two second-stage split blanks of the stay ring and spiral case assembly, wherein cutting surfaces and the assembly surfaces of the split blanks of the stay ring together constitute assembly surfaces of the second-stage split blanks of the stay ring and spiral case assembly;
operation S2.8, flipping each second-stage split blank of the stay ring and spiral case assembly and complete welding of weld root grooves at all flat, horizontal, and vertical welding positions of the second-stage split blank;
operation S2.9, flipping each second-stage split blank of the stay ring and spiral case assembly again and completing remaining weld penetration of the weld grooves in the operation S2.7; and
operation S2.10, checking whether a dimension of each second-stage split blank of the stay ring and spiral case assembly meets a standard, and if so, annealing the second-stage split blank of the stay ring and spiral case assembly.

Preferably, during the annealing, support is added below a rim surface of each split blank of the stay ring and spiral case assembly, to adjust an elevation of the center of the rim surface of the split blank of the stay ring and spiral case assembly, so that an elevation difference with the water guide mechanism centerline is ≤3mm and the two split blanks of the stay ring and spiral case assembly are in the same direction.

Preferably, the anti-deformation support is in a 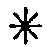 shape.

Preferably, the cutting line and a line connecting center points of the two spacers at the assembly surfaces of the two first-stage split blanks of the stay ring and spiral case assembly are located in the same plane.

Preferably, in the operation S3, the processing assembly surfaces of the two split blanks of the stay ring and spiral case assembly to form the flat edges and bevel edges is processing the cutting surfaces together with the assembly surfaces of the split blanks of the stay ring into the flat edges and bevel edges.

Preferably, after the first-stage split blanks of the stay ring and spiral case assembly are rounded and leveled, the two split blanks of the stay ring are in the same plane with a horizontality deviation≤0.5mm, X-axis parallelism of the two split blanks of the stay ring is ≤0.5mm, and Y-axis coaxiality of the two split blanks of the stay ring is ≤0.5mm.

### Advantages of the Application

(1) The present disclosure optimizes the structure of the traditional split surface transition plate + joint section into a spiral case having splitting segments, and adopts a method of integral blanking, forming, welding, cutting, and processing of the split segments of the spiral case, which can thoroughly resolves the quality risks associated with assembly gaps and misalignment in the joint sections of the stay ring and spiral case assembly in the existing pumped storage unit. This reduces the assembly difficulty of the stay ring and spiral case assembly, decreases the amount of welding, and enhances the reliability of the manufacturing quality. Additionally, it reduces the workload of fitting, assembling, and welding both in the factory and on the construction site, thereby shortening the manufacturing cycle.
(2) The method of integrally cutting, forming, assembling, and welding the split segments of the spiral case, followed by cutting and processing along the split surface, improves the consistency of radius dimensions of the split surfaces of the spiral case. Through UG simulation calculations, the misalignment at the split surfaces of the spiral case is approximately 1mm, significantly enhancing the precision of assembly dimensions.
(3) When cutting the spiral case, a processing allowance is reserved on the cutting surface of the split segments of the spiral case. This allowance is later removed during the processing of the assembly surfaces of the stay ring, greatly improving the circumferential dimensional accuracy of the split surfaces of the spiral case, allowing the gap between the split segments of the spiral case to be controlled within 1mm.
(4) Under the same weld performance and flaw detection requirements, the present disclosure reduces the number and the amount of welds required on the construction site for the stay ring and spiral case assembly, thereby reducing welding stress and improving the dimensional accuracy after the assembly welding on the construction site.
(5) The present disclosure transfers a longitudinal seam welding of a heavily stressed split surface transition plate + joint section structure from on-site to factory welding and annealing, improving the quality of the welds.
(6) The present disclosure reduces factory processes of cutting transition plates, rounding the stay ring, and preparing for pre-assembly, as well as the on-site assembly and welding workload of the joint sections, thereby significantly shortening the manufacturing cycle and improving the production efficiency of the enterprise.

### Brief Description of the Drawings

The foregoing and following detailed description of the present disclosure will become more apparent when read in conjunction with the following drawings, wherein:
FIG. 1 is a schematic diagram of a three-dimensional structure of a stay ring and spiral case assembly of an existing pumped storage unit in the Background;
FIG. 2 is a schematic plan view of the stay ring and spiral case assembly of the existing pumped storage unit in the Background;
FIG. 3 is a schematic diagram showing welding of the stay ring and spiral case assembly of the existing pumped storage unit in the Background;
FIG. 4 is a schematic diagram of a three-dimensional structure of a stay ring and spiral case assembly of a pumped storage unit according to the present disclosure;
FIG. 5 is a schematic plan view of the stay ring and spiral case assembly of the pumped storage unit according to the present disclosure; and
FIG. 6 is a schematic diagram showing welding of the stay ring and spiral case assembly of the pumped storage unit according to the present disclosure.

### Detailed Description of the Embodiments

In order to enable those skilled in the art to better understand the technical solutions of the present invention, the following will further illustrate the technical solutions for achieving the purpose of the present invention through several specific embodiments. It should be noted that the technical solutions claimed for protection by the present invention include but are not limited to the following embodiments. Based on the embodiments of the present invention, all other embodiments obtained by those skilled in the art without making any creative efforts shall fall within the scope of protection of the present invention.

A spiral case of an existing pumped storage unit adopts a structure of "split surface transition plate + joint section (also called compensation section)", whose structure can be referred to FIGS. 1 to 3 of the specification. The main purposes of this structural design are twofold: one is to address separate transportation of split segments of the stay ring and spiral case assembly, and the other is to address accumulation of circumferential dimensional deviations after assembly and welding of multiple spiral case sections. A manufacturing process of the spiral case is roughly as follows: (1) cutting and forming the joint section and the transition plate into a C-shaped section as a whole; (2) separating the transition plate therefrom; ( 3) leveling and rounding a stay ring ; ( 4) assembling and welding the transition plate to the stay ring; (5) roughly preparing the joint section; (6 ) cutting the transition plate along a split surface; (7) processing the stay ring; (8) rounding the stay ring; (9) finely adjusting the joint section; (10) assembling and welding the joint section to the transition plate on a construction site.

During the manufacturing process, due to the standard tolerances of a dimension of the formed joint section and a dimension of an end surface of the spiral case adjacent to the joint section, and the fact that the joint section is a three-dimensional spatial curve, the joint section is difficult to precisely manufacture, the quality is difficult to guarantee, and the manufacturing cycle is long. Therefore, the manufacturing difficulties of the existing stay ring and spiral case assembly are summarized as follows:
(1) After the integral forming of the joint section, the transition plate needs to be separated therefrom and subsequently welded to the stay ring, followed by being welded to the joint section. This process involves multiple operations, including several non-value-added operations.
(2) When the joint section is prepared and adjusted, in order to ensure the dimensional accuracy of end surfaces of the joint section respectively adjacent to water inlet and outlet ends, both of the two end surfaces need to be processed, and the processing of the two end surfaces requires a transfer sequence involving multiple operations, which entails significant time for workpiece repositioning and processing.
(3) It is difficult to prepare and adjust the joint section in the factory, since a gap and misalignment often exceed the tolerance. It is difficult to meet a 100% qualified size of the joint section.
(4) The preparation of the joint section is done twice, which takes up a long production cycle.
(5) The joint section is difficult to assemble on the construction site. The welding volume is large, the welding stress is high, the deformation of the stay ring after welding is significant, and a manufacturing cycle at a construction site is long.

In view of this, this embodiment provides a structure of a stay ring and spiral case assembly of a pumped storage unit and a method for manufacturing the same. This solution sets two (left and right) split segments of the spiral case along a split surface of the stay ring and spiral case assembly, eliminates "the split surface transition plate + the joint section" structure. The two split segments of the spiral case are cut and formed as one piece, and then welded and annealed in the factory, followed by being cut along the split surface. The split surface of the two split segments of the spiral case is processed together with assembly surfaces of the stay ring, thereby forming two split segments of the stay ring and spiral case assembly. The two split segments of the stay ring and spiral case assembly are transported to the construction site, and are welded and assembled after being rounded at the construction site. The entire stay ring and spiral case assembly structure only has a circumferential weld on the assembly surface.

In this embodiment, it should be noted that the stay ring and spiral case assembly is a combination structure of a stay ring and a spiral case. The spiral case is a spiral tubular structure as a whole, having a start end and a tail end intersecting with each other. The start end and the tail end of the spiral case are connected to each other but not communicated. Further, the spiral case is made of a plurality of C-shaped spiral case sections through assembling and welding, among which a spiral case section located at the split surface is called a split spiral case section in this embodiment.

The stay ring is formed by splicing two 180-degree split segments of the stay ring together. The stay ring is fixedly connected to the spiral case arranged on the stay ring by welding, and start and tail ends of the stay ring are overlapped with the start and tail ends of the spiral case. An opening is provided on an inner circumference of the spiral case for installing the stay ring. The stay ring as a whole extends along the inner circumference of the spiral case and is welded in the opening. Furthermore, a single stay ring is composed of two upper and lower ring plates arranged parallel to each other and fixed guide vanes located between the two ring plates. A plurality of fixed guide vanes are distributed at equal intervals along the circumference of the spiral case starting from the start end of the spiral case, which can achieve an effect of uniform water supply. Furthermore, the fixed guide vanes are inclined at a certain angle along a direction of water flow, which can buffer the impact force of water flow to a certain extent.

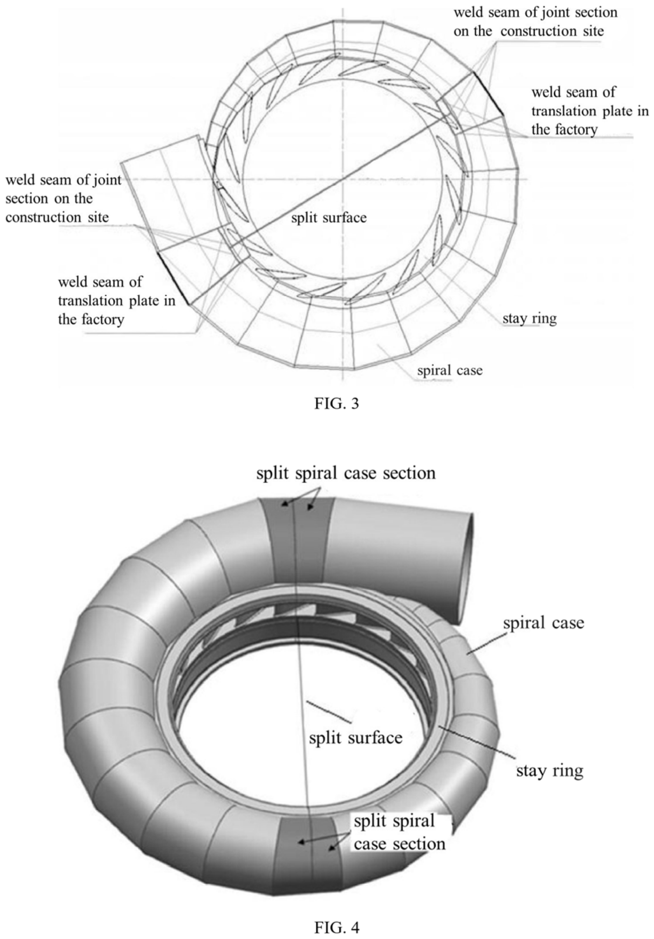

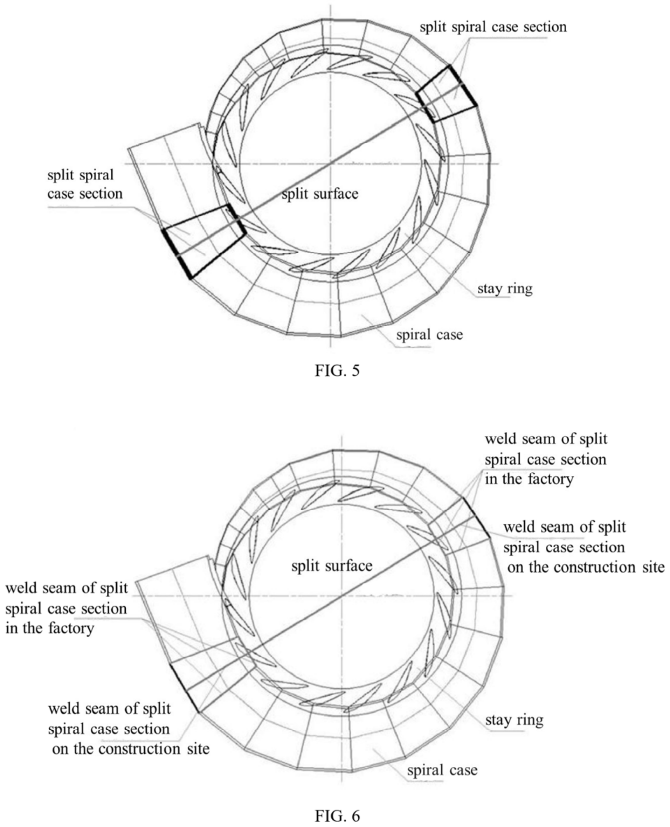

An embodiment of the present disclosure discloses a method for manufacturing a stay ring and spiral case of a pumped storage unit. To meet transportation requirements, the stay ring and the spiral case are first manufactured and formed into two 180-degree split structures in a factory. Subsequently, the two 180-degree split structures are transported to the construction site, where they are rounded, and then are assembled and welded together to form a complete stay ring and spiral case assembly in a spiral shape. The structure and welding method of the entire stay ring and spiral case assembly can be seen in FIGS. 4 to 6 of the specification. This method specifically includes the following operations.
operation S1, all spiral case sections required for assembly are integrally cut and formed by a Computer Numerical Control (CNC) machine tool to form a plurality of C-shaped spiral case sections, wherein two (referred to as split spiral case sections) of the plurality of C-shaped spiral case sections located at the split surface of the stay ring and spiral case assembly are preset with an assembling and cutting allowance during the cutting and forming.

In this embodiment, the assembling and cutting allowance is generally 30 millimetres (mm).

Operation S2, in the processing factory, all spiral case sections of the plurality of C-shaped spiral case sections except the split spiral case sections are assembled on two split blanks of the stay ring, the two split blanks of the stay ring assembled with the spiral case sections are rounded and leveled, and then the split spiral case sections are assembled on the rounded and leveled structure. The two split blanks of the stay ring are rounded to form a stay ring blank, and all of the spiral case sections arranged on the stay ring blank constitute a spiral case blank, and the stay ring blank and the spiral case blank form a complete blank of the stay ring and spiral case assembly. Subsequently, the blank of the stay ring and spiral case assembly is divided into two split blanks of the stay ring and spiral case assembly, and the two split blanks of the stay ring and spiral case assembly are annealed respectively.

More specifically, the operation S2 includes the following contents.
Operation S2.1, ring plates of the two split segments of the stay ring and the fixed guide vanes are assembled and assembly surfaces of the two split blanks of the stay ring and the fixed guide vanes are roughly processed, including: welding an upper ring plate and a lower ring plate of the two split segments of the stay ring to the fixed guide vanes by a welding device thereby obtaining the split blanks of the stay ring, and then processing the assembly surfaces of the two split blanks of the stay ring, with 7mm of subsequent processing allowance left on two ends of each of the assembly surfaces.

In this embodiment, it should be noted that, since the stay ring of the stay ring and spiral case assembly is formed by splicing the two split segments of the stay ring, two split blanks of the stay ring will be obtained during processing.

In this embodiment, it should also be noted that the operation S2.1 is a processing process of the stay ring blank, which can be carried out simultaneously with the processing process of the spiral case section in the operation S1 in the factory, and there is no strict order between the two.

Operation S2.2, a water guide mechanism centerline of each split blank of the stay ring is drawn; an intersection line of a theoretical assembly surface of each split blank of the stay ring and a plane where an upper or lower plane of each split blank of the stay ring is determined as an X-axis; a Y-axis perpendicular to the X-axis is drawn; and the water guide mechanism centerline, the X-axis, and the Y-axis are used as assembly reference lines for the split blank of the stay ring. In this embodiment, it should be noted that the theoretical assembly surface of each split blank of the stay ring refers to a plane passing through the center of the split blank of the stay ring, and the theoretical assembly surface is in a vertical plane.

In this embodiment, it should be noted that the upper plane of each split blank of the stay ring refers to an upper plane (i.e., an upper surface) of the upper ring plate, and the lower plane of each split blank of the stay ring refers to a lower plane (i.e., a lower surface) of the lower ring plate.

In this embodiment, the assembly reference lines of the two split blanks of the stay ring are drawn according to the operation process of the operation S2.2.

Operation S2.3, according to the assembly reference line lines for the split blank of the stay ring drawn in the operation S2.2, all of the spiral case sections except the split spiral case sections are assembled onto the two split blanks of the stay ring to form two first-stage split blanks of the stay ring and spiral case assembly.

Operation S2.4, the water guide mechanism centerline and the X-axis and Y-axis of each split blank of the stay ring are redrawn in the same manner as in the operation S2.2, and are determined as new assembly reference lines.

Operation S2.5, according to the redrawing result of the operation S2.4, and based on the principle that the water guide mechanism centerlines of the two split blanks of the stay ring are in the same plane with a horizontality deviation≤0.5mm, X-axis parallelism of the two split blanks of the stay ring is ≤0.5mm, and Y-axis coaxiality of the two split blanks of the stay ring is ≤0.5mm, the two first-stage split blanks of the stay ring and spiral case assembly are leveled and rounded, and a spacer is added between the assembly surfaces of the two first-stage split blanks of the stay ring and spiral case assembly. The two first-stage split blanks of the stay ring and spiral case assembly are adjusted and rounded to constitute a first-stage blank of the stay ring and spiral case assembly.

In this embodiment, it should be noted that the spacer added between the two split blanks is actually installed between the two split blanks of the stay ring, located at the assembly surfaces of the two split segments of the stay ring. A single split blank of the stay ring has two assembly surfaces. Therefore, after the two split blanks of the stay ring are leveled and rounded, there are two spacers in total. After the adjustment and rounding, the spacers do not have a mechanical fastening with the assembly surfaces of the split blanks of the stay ring on both sides, but are merely stuck between the two assembly surfaces. The entire split blank of the stay ring is free and without any constraints.

Furthermore, after the two first-stage split blanks of the stay ring and spiral case assembly are leveled and rounded, the two split blanks of the stay ring are equivalent to forming a complete stay ring blank. However, at this time, the split spiral case sections located on the split surface of the stay ring blank have not been installed in place, so a complete blank of the stay ring and spiral case assembly has not yet been formed.

Operation S2.6, the split spiral case sections are assembled on the first-stage blank of the stay ring and spiral case assembly. At this time, all of the spiral case sections on the entire stay ring blank are installed in place. All of the spiral case sections constitute the spiral case blank on the stay ring blank. The spiral case blank and the stay ring blank below together constitute a second-stage blank of the stay ring and spiral case assembly. An anti-deformation support shall be welded on the inner circle side of the split spiral case section, 150mm away from the assembly surface of the split blank of the stay ring.

In this embodiment, it should be noted that, through the assembly in the operation 2.6, the formed second-stage blank of the stay ring and spiral case assembly is a final complete blank of the stay ring and spiral case assembly, based on which final assembly, welding, cutting, and polishing are carried out to obtain the two split segments of the stay ring and spiral case assembly.

In this embodiment, it should also be noted that the anti-deformation support is a 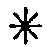 structure.
operation S2.7, half of weld penetration of single-sided weld grooves at all flat, horizontal, and vertical welding positions of the split spiral case sections is completed, and the second-stage blank of the stay ring and spiral case assembly is split into two segments along a cutting line. The cutting line is located on the split spiral case sections. After the cutting, the second-stage blank of the stay ring and spiral case assembly forms two second-stage split blanks of the stay ring and spiral case assembly. Cutting surfaces and the assembly surfaces of the split blanks of the stay ring together constitute the assembly surfaces of the second-stage split blanks of the stay ring and spiral case assembly.

In this embodiment, it should be noted that the cutting line and a line connecting center points of the two spacers at the assembly surfaces of the two first-stage split blanks of the stay ring and spiral case assembly are located in the same plane.

In this embodiment, it should also be noted that the cutting process is essentially to cut the split spiral case sections from the split surface into two parts. Since the two split blanks of the stay ring below are not connected together at this time, in this embodiment, the assembly surfaces of the second-stage split blanks of the stay ring and spiral case assembly are equivalent to the split surface blank of a later stay ring and spiral case assembly. The assembly surface needs to be processed subsequently before a final split surface can be obtained.

Operation S2.8, each second-stage split blank of the stay ring and spiral case assembly is flipped and welding of weld root grooves at all flat, horizontal, and vertical welding positions of the second-stage split blank is completed.

In this embodiment, "flipping" refers to flipping a structure 180 degrees.

Operation S2.9, each second-stage split blank of the stay ring and spiral case assembly is flipped again and remaining weld penetration of the weld grooves in the operation S2.7 is completed.

Operation S2.10, whether a dimension of each second-stage split blank of the stay ring and spiral case assembly meets a standard is checked, and if so, the second-stage split blank of the stay ring and spiral case assembly is annealed.

In this embodiment, it should be noted that during annealing, support is added below an end surface of each split blank of the stay ring and spiral case assembly, to adjust an elevation of the center of the end surface of the split blank of the stay ring and spiral case assembly, so that an elevation difference relative to the water guide mechanism centerline is ≤3mm and deviation directions of the two split blanks of the stay ring and spiral case assembly are consistent.

In this embodiment, it should also be noted that, regardless of whether the split spiral case sections located at the split surface or the remaining spiral case sections are assembled to the stay ring, assembly welding is performed between adjacent spiral case sections and between the spiral case section and the stay ring below. Once the welding is completed, a unified structure is formed.

Operation S3, the assembly surfaces of the two split blanks of the stay ring and spiral case assembly are processed to form flat edges and bevel edges, thereby forming the two split segments of the stay ring and spiral case assembly.

In this embodiment, the processing assembly surfaces of the two split blanks of the stay ring and spiral case assembly to form the flat edges and bevel edges means processing the cutting surfaces of the spiral case together with the assembly surfaces of the split blanks of the stay ring into the flat edges and bevel edges, after which the split segments of the stay ring and spiral case assembly is obtained. The processed surfaces are the assembly surfaces of split segments of the stay ring and spiral case assembly, and are also the split surfaces of the entire stay ring and spiral case assembly.

In this embodiment, the operations S2 and S3 represent the entire process for manufacturing the two split segments of the stay ring and spiral case assembly. Both of the operations are completed within the processing factory. Subsequently, the manufactured split segments of the stay ring and spiral case assembly are transported to the construction site for assembly. This assembly is an operation S4 of this solution as described below.

In the operation S4, the two split segments of the stay ring and spiral case assembly are transported to the construction site, following which the two split segments of the stay ring and spiral case assembly are rounded on the construction site, and are welded along the assembly surfaces of the two split segments of the stay ring and spiral case assembly to form a whole structure, thereby completing the manufacture of the stay ring and spiral case assembly.

The stay ring and spiral case assembly manufactured using the above solution eliminates the "the split surface transition plate + the joint section" structure. The two split segments of the spiral case are cut and formed in one piece, welded and annealed in the factory, and then cut along the split surfaces. The split surfaces of the split segments of the spiral case is processed together with the assembly surfaces of the stay ring, ultimately forming the two split segments of the stay ring and spiral case assembly. The two split segments of the stay ring and spiral case assembly are transported to the construction site, where they are rounded and assembled by welding. The entire stay ring and spiral case assembly only has a circumferential weld on the assembly surfaces. Therefore, the manufacturing method of the present disclosure can improve the assembly dimensional accuracy and welding quality of the split segments of the stay ring and spiral case assembly, and shorten the manufacturing cycle.

The above description is only a preferred embodiment of the present disclosure and does not limit the present disclosure in any form. Any simple modification or equivalent change made to the above embodiment based on the technical essence of the present disclosure shall fall within the scope of protection of the present disclosure.

## Claims

1. A method for manufacturing a stay ring and spiral case assembly of a pumped storage unit, **characterized in that** the stay ring and spiral case assembly is divided into two segments at 180 degrees for assembly and welding to meet transportation requirements, wherein the method comprises the following operations:
operation S1, integrally cutting spiral case sections, wherein split spiral case sections among the spiral case sections located at split surfaces of the stay ring and spiral case assembly are preset with an assembling and cutting allowance;
operation S2, assembling all of the spiral case sections other than the split spiral case sections on two split blanks of a stay ring, rounding and leveling the two split blanks of the stay ring with the spiral case sections, assembling the split spiral case sections on a rounded and leveled structure to form a complete blank of the stay ring and spiral case assembly, dividing the blank of the stay ring and spiral case assembly into two split blanks of the stay ring and spiral case assembly, and annealing the two split blanks of the stay ring and spiral case assembly, respectively;
operation S3, processing assembly surfaces of the two split blanks of the stay ring and spiral case assembly to form flat edges and bevel edges, so as to form two split segments of the stay ring and spiral case assembly;
operation S4, transporting the two split segments of the stay ring and spiral case assembly to a construction site, rounding the two split segments of the stay ring and spiral case assembly on the construction site, and welding the two split segments of the stay ring and spiral case assembly along assembly surfaces of the two split segments of the stay ring and spiral case assembly to form a whole structure, thereby completing the manufacture of the stay ring and spiral case assembly.

2. The method for manufacturing the stay ring and spiral case assembly of the pumped storage unit according to claim 1, **characterized in that** in the operation S1, the integrally cutting refers to integrally cutting and forming the spiral case sections through a Computer Numerical Control (CNC) machine tool.

3. The method for manufacturing the stay ring and spiral case assembly of the pumped storage unit according to claim 1, **characterized in that** the operation S2 specifically comprises the following operations:
operation S2.1, assembling and welding upper and lower ring plates of the stay ring to fixed guide vanes to obtain the two split blanks of the stay ring, processing the assembly surfaces of the two split blanks of the stay ring, with a subsequent processing allowance left on two ends of each of the assembly surfaces;
operation S2.2, drawing a water guide mechanism centerline of each split blank of the stay ring, using an intersection line of a theoretical assembly surface of each split blank of the stay ring and a plane where an upper or lower plane of each split blank of the stay ring is located as an X-axis, drawing a Y-axis perpendicular to the X-axis, and using the water guide mechanism centerline, the X-axis, and the Y-axis as assembly reference lines for the split blank of the stay ring;
operation S2.3, according to the assembly reference lines for the split blank of the stay ring, assembling and welding all of the spiral case sections except the split spiral case sections onto the two split blanks of the stay ring to form two first-stage split blanks of the stay ring and spiral case assembly;
operation S2.4, redrawing the water guide mechanism centerline and the X-axis and Y-axis of each split blank of the stay ring in the same manner as in the operation S2.2;
operation S2.5, according to the redrawn water guide mechanism centerline, X-axis, and Y-axis, rounding and leveling the two first-stage split blanks of the stay ring and spiral case assembly, and adding a spacer between assembly surfaces of the two first-stage split blanks of the stay ring and spiral case assembly to constitute a first-stage blank of the stay ring and spiral case assembly, wherein two spacers are respectively provided between the two first-stage split blanks of the stay ring and spiral case assembly;
operation S2.6, assembling the split spiral case sections on the first-stage blank of the stay ring and spiral case assembly to form a second-stage blank of the stay ring and spiral case assembly, and welding an anti-deformation support on an inner circle side of each of the split spiral case sections;
operation S2.7, completing half of weld penetration of single-sided weld grooves at all flat, horizontal, and vertical welding positions of the split spiral case sections, and splitting the second-stage blank of the stay ring and spiral case assembly into two segments along a cutting line to form two second-stage split blanks of the stay ring and spiral case assembly, wherein cutting surfaces and the assembly surfaces of the split blanks of the stay ring together constitute assembly surfaces of the second-stage split blanks of the stay ring and spiral case assembly;
operation S2.8, flipping each second-stage split blank of the stay ring and spiral case assembly and complete welding of weld root grooves at all flat, horizontal, and vertical welding positions of the second-stage split blank;
operation S2.9, flipping each second-stage split blank of the stay ring and spiral case assembly again and completing remaining weld penetration of the weld grooves in the operation S2.7; and
operation S2.10, checking whether a dimension of each second-stage split blank of the stay ring and spiral case assembly meets a standard, and if so, annealing the second-stage split blank of the stay ring and spiral case assembly.

4. The method for manufacturing the stay ring and spiral case assembly of the pumped storage unit according to claim 1, **characterized in that** during the annealing, support is added below an end surface of each split blank of the stay ring and spiral case assembly, to adjust an elevation of center of the end surface of the split blank of the stay ring and spiral case assembly, so that an elevation difference relative to the water guide mechanism centerline is ≤3 mm and deviation directions of the two split blanks of the stay ring and spiral case assembly are consistent.

5. The method for manufacturing the stay ring and spiral case assembly of the pumped storage unit according to claim 3, **characterized in that** the anti-deformation support is in a 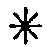 shape.

6. The method for manufacturing the stay ring and spiral case assembly of the pumped storage unit according to claim 3, **characterized in that** the cutting line and a line connecting center points of the two spacers at the assembly surfaces of the two first-stage split blanks of the stay ring and spiral case assembly are located in the same plane.

7. The method for manufacturing the stay ring and spiral case assembly of the pumped storage unit according to claim 3, **characterized in that** in the operation S2.6, the anti-deformation support is welded at a distance of 150 mm from the inner circle side of each split spiral case section to the assembly surface of the split blanks of the stay ring.

8. The method for manufacturing the stay ring and spiral case assembly of the pumped storage unit according to claim 1, **characterized in that** in the operation S3, the processing assembly surfaces of the two split blanks of the stay ring and spiral case assembly to form the flat edges and bevel edges is processing the cutting surfaces together with the assembly surfaces of the split blanks of the stay ring into the flat edges and bevel edges.

9. The method for manufacturing the stay ring and spiral case assembly of the pumped storage unit according to claim 1, **characterized in that** after the first-stage split blanks of the stay ring and spiral case assembly are rounded and leveled, the two split blanks of the stay ring are in the same plane with a horizontality deviation≤0.5 mm, X-axis parallelism of the two split blanks of the stay ring is ≤0.5 mm, and Y-axis coaxiality of the two split blanks of the stay ring is ≤0.5 mm.
